# EUROPÄISCHE PATENTSCHRIFT

(11) **EP 1 001 854 B1**
(45) Veröffentlichungstag und Bekanntmachung des Hinweises auf die Patenterteilung: **23.10.2002**
(21) Anmeldenummer: 98942601.0
(22) Anmeldetag: 23.07.1998
(51) Int. Cl.: B05D 7/00

(54) **VERFAHREN ZUR AUFBRINGUNG EINES SCHÜTZENDEN UND DEKORATIVEN SCHICHTENVERBUNDES**
METHOD FOR APPLYING A PROTECTIVE AND DECORATIVE LAYERED COMPOSITE
PROCEDE D'APPLICATION D'UN COMPOSITE STRATIFIE PROTECTEUR ET DECORATIF

(30) Priorität: 01.08.1997 DE 19733312
(43) Veröffentlichungstag der Anmeldung: 24.05.2000
(73) Patentinhaber: E.I. DU PONT DE NEMOURS AND COMPANY, Wilmington Delaware 19898 (US)
(72) Erfinder: BLUM, Joachim, D-42897 Remscheid (DE); KLEIN, Klausjörg, D-42289 Wuppertal (DE)
(74) Vertreter: Hrabal, Ulrich
(86) Internationale Anmeldenummer: EP9804614
(87) Internationale Veröffentlichungsnummer: WO99006158

(56) Entgegenhaltungen:
- WO-A-96/38234
- DE-A- 4 424 299
- DE-A- 19 517 068
- DE-A- 19 716 234
- DE-C- 19 519 665
- DE-C- 19 633 173
- US-A- 5 203 975

## Beschreibung

Die Erfindung betrifft ein beschichtetes, elektrisch leitfähiges, dreidimensionales Substrat sowie ein Verfahren zu seiner Herstellung.

Heutige Automobilserienlackierungen bestehen meist aus einer Basislack/Klarlack-Decklackierung, die auf eine elektrophoretisch grundierte und mit Füller beschichtete Karosse aufgebracht wird. Dabei werden Füller, Basislack und Klarlack durch Spritzen aufgebracht. Im Lackierprozeß fällt problematischer Lackschlamm aus der Spritzapplikation in großen Mengen an. Der Lackierprozeß erfordert eine aufwendige Logistik beim Fahrzeughersteller als Folge der aus unterschiedlichen Lackmaterialien aufzubringenden Lackschichten als auch der Farbtonvielfalt, in der einzelne der Lackschichten hergestellt werden. So werden die Basislackschichten, bei vielen Automobilherstellern aber auch die Füllerschichten, in mehreren unterschiedlichen Farbtönen appliziert.

In der Bundesrepublik Deutschland beispielsweise ist der Farbton von als Taxi gekennzeichneten Fahrzeugen vorgeschrieben. Ausgediente Taxifahrzeuge sind schwer verkäuflich, da sie als ehemalige Taxen erkannt werden können. Aus diesem Grunde hat man übliche, nicht in Taxifarbton lackierte PKW mit einer in Taxifarbton gehaltenen, den eigentlichen Farbton der Mehrschichtlackierung verdeckenden Kunststofffolie überklebt. Diese Folie kann später vom ausgedienten Taxi entfernt werden, wobei die eigentliche Lackierung wieder zum Vorschein kommt.

Die DE-A-4424299 offenbart mit mehreren Schichten beschichtete Substrate, bei denen auf die Oberfläche der Substrate eine Kunststofffolie laminiert wird, deren Oberfläche anschließend lackiert wird.

Aufgabe der Erfindung ist die Bereitstellung eines logistisch einfachen und Lackierabfälle vermeidenden Verfahrens, das es gestattet die Oberfläche dreidimensionaler Substrate, insbesondere von Kraftfahrzeugen schützend zu beschichten und dekorativ auszustatten. Insbesondere soll das Verfahren umweltfreundlich und rationell durchführbar sein.

Es hat sich gezeigt, daß diese Aufgabe gelöst werden kann durch die Bereitstellung eines beschichteten, dreidimensionalen, elektrisch leitfähigen Substrates, wie im Patentanspruch 1 definiert, und eines Verfahrens zu seiner Herstellung, wie im Patentanspruch 3 definiert, worin auf ein elektrisch leitfähiges Substrat eine im eingebrannten Zustand elektrisch leitfähige Grundierungsschicht aus einem Überzugsmittel (I) unter Vermeidung des Spritzauftrags aufgebracht und eingebrannt wird, worauf ein noch nicht in der gewünschten dreidimensionalen Form vorliegendes Substrat verformt wird, worauf eine zweite Überzugsschicht aus einem elektrophoretisch abscheidbaren Überzugsmittel (II) elektrophoretisch abgeschieden und eingebrannt wird und worauf eine Kunststofffolie aufgebracht wird.

Insbesondere wird beim erfindungsgemäßen Verfahren die leitfähige Grundierungsschicht durch Streichen, Walzen, Tauchen oder Fluten aufgebracht. Besonders bevorzugt ist das Aufbringen der leitfähigen Grundierungsschicht im Coil-Coating-Verfahren, durch autophoretische Abscheidung oder elektrophoretische Abscheidung. Die leitfähige Grundierungsschicht kann auf der gesamten Oberfläche, z.B. beidseitig auf das Substrat aufgebracht werden. Das Substrat kann sich schon vor Aufbringung der Grundierungsschicht in der gewünschten dreidimensionalen Form befinden. Es ist auch möglich das Substrat erst nach Aufbringen und Einbrennen der leitfähigen Grundierungsschicht dreidimensional zu verformen, wobei es vorher gegebenenfalls gestanzt oder geschnitten wird. Die Verformung kann nach dem Fachmann für das jeweilige Substrat geläufigen Verfahren erfolgen, z.B. durch Tiefziehen. Das Substrat kann auch in der Form von Einzelteilen vorliegen, die vor Aufbringen der zweiten Überzugsschicht zu einer Konstruktion zusammengefaßt werden können, wobei die Einzelteile schon vorher mit der Grundierungsschicht versehen sein können.

Die im eingebrannten Zustand elektrisch leitfähige Überzugsschicht kann aus unterschiedlichen Überzugsmitteln (I) aufgebracht werden, wobei erfindungsgemäß keine Spritzauftragsverfahren zur Anwendung kommen.

Eine erste bevorzugte Ausführungsform der vorliegenden Erfindung besteht in einem Verfahren zur Herstellung eines schützenden und dekorativen Schichtenverbundes auf einem dreidimensionalen, elektrisch leitfähigen Substrat, bei dem auf ein Coil aus Metallblech beidseitig im Coil Coating-Verfahren eine im eingebrannten Zustand elektrisch leitfähige Grundierungsschicht aus einem Grundierungsüberzugsmittel (Ia) aufgebracht und eingebrannt wird, aus dem Coil anschließend Blechteile ausgestanzt und im Tiefziehverfahren verformt und gegebenenfalls zu einer Konstruktion zusammengefügt werden, worauf eine zweite Überzugsschicht aus einem elektrophoretisch abscheidbaren Überzugsmittel (II) elektrophoretisch abgeschieden und eingebrannt wird und worauf anschließend eine Kunststoffolie aufgebracht wird.

Eine zweite bevorzugte Ausführungsform der vorliegenden Erfindung besteht in einem Verfahren zur Herstellung eines schützenden und dekorativen Schichtenverbundes auf einem dreidimensionalen, elektrisch leitfähigen und eine autophoretisch beschichtbare Oberfläche aufweisenden Substrat, bei dem eine im eingebrannten Zustand elektrisch leitfähige Grundierungsschicht aus einem autophoretisch abscheidbaren Überzugsmittel (Ib) autophoretisch abgeschieden und eingebrannt wird, worauf eine weitere Überzugsschicht aus einem elektrophoretisch abscheidbaren Überzugsmittel (II) elektrophoretisch abgeschieden und eingebrannt wird und worauf anschließend eine Kunststoffolie aufgebracht wird.

Eine dritte und besonders bevorzugte Ausführungsform der vorliegenden Erfindung besteht in einem Verfahren zur Herstellung eines schützenden und dekorativen Schichtenverbundes auf einem dreidimensionalen, elektrisch leitfähigen Substrat, bei dem eine im eingebrannten Zustand elektrisch leitfähige Grundierungsschicht aus einem elektrophoretisch abscheidbaren wäßrigen Überzugsmittel (Ic) elektrophoretisch abgeschieden und eingebrannt wird, worauf eine weitere Überzugsschicht aus einem von (Ic) verschiedenen elektrophoretisch abscheidbaren Überzugsmittel (II) elektrophoretisch abgeschieden und eingebrannt wird und worauf anschließend eine Kunststoffolie aufgebracht wird.

Bei der ersten bevorzugten Ausführungsform des erfindungsgemäßen Verfahrens wird eine Grundierungsschicht aus einem Grundierungsüberzugsmittel (Ia) in einer Schichtdicke erstellt, daß sich im eingebrannten Zustand eine elektrisch leitfähige Überzugsschicht ergibt. Nach dem Ausstanzen und Verformen der so grundierten und gegebenenfalls zu einer Konstruktion, insbesondere einer Automobilkarosserie zusammengefügten Blechteile kann dann die zweite Schicht durch elektrophoretische Abscheidung aus einem elektrophoretisch abscheidbaren wäßrigen Überzugsmittel (II) aufgebracht werden.

Bei den Grundierungsüberzugsmitteln (Ia) handelt es sich insbesondere um flüssige, im Coil Coating-Verfahren applizierbare Überzugsmittel. Es kann sich um Überzugsmittel auf wäßriger Basis oder auf Basis organischer Lösemittel handeln. Sie können physikalisch trocknend sein. In der Regel sind sie unter Ausbildung kovalenter Bindungen vernetzbar. Dabei kann es sich um selbst- oder fremdvernetzende Systeme handeln.

Die im erfindungsgemäßen Verfahren für die Herstellung der Grundierungsschicht verwendbaren Grundierungsüberzugsmittel (Ia) enthalten ein oder mehrere filmbildende Bindemittel. Sie können, insbesondere falls die Bindemittel nicht selbstvernetzend oder physikalisch trocknend oder thermoplastisch sind, gegebenenfalls auch Vernetzer enthalten. Sowohl die Bindemittelkomponente als auch die Vernetzerkomponente unterliegen an sich keinerlei Beschränkung; es können lackübliche, dem Fachmann geläufige Harze verwendet werden. Beispielsweise können als filmbildende Bindemittel Polyester-, Polyurethan-, Epoxid- und/oder Polymerisatharze verwendet werden.

Die Auswahl der gegebenenfalls enthaltenen Vernetzer richtet sich nach der Funktionalität der Bindemittel, d.h. die Vernetzer werden aus üblichen, dem Fachmann geläufigen Vernetzern so ausgewählt, daß sie eine zur Funktionalität der Bindemittel komplementäre, reaktive Funktionalität aufweisen. Beispiele für solche komplementäre Funktionalitäten zwischen Bindemittel und Vernetzer sind: Hydroxyl/Methylolether, Hydroxyl/ blockiertes Isocyanat. Sofern miteinander verträglich. können auch mehrere solcher komplementärer Funktionalitäten nebeneinander vorliegen. Die gegebenenfalls in den Grundierungsüberzugsmitteln (Ia) verwendeten Vernetzer können einzeln oder im Gemisch vorliegen.

Es ist im erfindungsgemäßen Verfahren bevorzugt, wenn die im Coil Coating-Verfahren applizierten Grundierungsüberzugsmittel (Ia) elektrische Leitfähigkeit vermittelnde Bestandteile enthalten, die der Grundierungsschicht im eingebrannten Zustand einen zur elektrophoretischen Abscheidung einer weiteren Überzugsschicht aus einem elektrophoretisch abscheidbaren Überzugsmittel (II) ausreichend niedrigen spezifischen Widerstand verleihen, im allgemeinen unter 10⁸ Ω cm, beispielsweise zwischen 10³ und 10⁸ Ω cm. Hierdurch wird auch Punktschweißbarkeit der Grundierungsüberzugsschicht gewährleistet. Beispiele für derartige elektrische Leitfähigkeit vermittelnde Bestandteile sind teilchenförmige elektrische Leiter oder Halbleiter, wie sie für diesen Zweck üblich und dem Fachmann geläufig sind, beispielsweise Eisenoxidschwarz, Graphit, Leitfähigkeitsruß, Metallpulver, z.B. aus Aluminium, Zink, Kupfer oder Edelstahl, Molybdändisulfid, spezielle Leitfähigkeitspigmente auf der Basis von Glimmerplättchen, z.B. mit mit Antimon dotiertem Zinndioxid umhüllte Glimmerplättchen. Die elektrische Leitfähigkeit verleihenden Bestandteile sind in dem Grundierungsüberzugsmittel (Ia) in einer derartigen Menge enthalten, daß der gewünschte spezifische Widerstand der Grundierungsüberzugsschicht im eingebrannten Zustand erreicht wird. Bezogen auf den Festkörpergehalt des Grundierungsüberzugsmittels (Ia) beträgt der Anteil des oder der elektrische Leitfähigkeit verleihenden Bestandteile beispielsweise zwischen 1 und 30 Gew.-%. Der Anteil kann vom Fachmann leicht ermittelt werden; er ist beispielsweise abhängig vom spezifischen Gewicht, der spezifischen elektrischen Leitfähigkeit und der Teilchengröße der eingesetzten elektrische Leitfähigkeit verleihenden Bestandteile. Es können ein oder mehrere dieser Bestandteile in Kombination vorliegen.

Die Grundierungsüberzugsmittel (Ia) können Pigmente und/oder Füllstoffe enthalten. Als Pigmente bzw. Füllstoffe kommen beispielsweise übliche, anorganische oder organische Pigmente und/oder Füllstoffe in Frage. Beispiele sind Ruß, Titandioxid, Eisenoxidpigmente, Kaolin, Talkum, Siliciumdioxid und insbesondere Korrosionsschutzpigmente, wie Zinkchromat, Strontiumchromat, Bleisilikat, Zinkphosphat, Aluminiumphosphat, Strontiumaluminiumpolyphosphathydrat.

Die Grundierungsüberzugsmittel (Ia) können weiterhin übliche Additive enthalten. Beispiele dafür sind übliche Lackaddditive, wie Netzmittel, Dispergierhilfsmittel, Emulgatoren, Verlaufsmittel, Korrosionsinhibitoren, Antischaummittel und insbesondere Gleitmittel, beispielsweise Wachse wie Polyethylenwachs, Molybdändisulfid, Graphit.

Zur Erzeugung von Grundierungsschichten geeignete, im Coil Coating-Verfahren applizierbare Grundierungsüberzugsmittel (Ia), die keine speziellen oder keine ausreichende Mengen an elektrische Leitfähigkeit vermittelnden Bestandteile enthalten, sind solche, aus denen bei Einhaltung einer niedrigen Trockenschichtdicke von beispielsweise 1 bis 3 µm Grundierungsschichten erzeugt werden können, die im eingebrannten Zustand eine zur Abscheidung einer nachfolgenden Überzugsschicht aus einem elektrophoretisch abscheidbaren Überzugsmittel (II) ausreichende elektrische Leitfähigkeit sowie bevorzugt auch Punktschweißfähigkeit aufweisen.

Bei den zur Erzeugung von Grundierungsschichten bevorzugt verwendbaren, im Coil Coating-Verfahren applizierbaren Grundierungsüberzugsmitteln (Ia), die aufgrund ihres Gehaltes an elektrische Leitfähigkeit vermittelnden Bestandteilen in höherer Trockenschichtdicke von beispielsweise 2 bis 15 µm, bevorzugt von 3 bis 10 µm appliziert werden können, handelt es sich um Überzugsmittel, aus denen Grundierungsschichten erzeugt werden können, die im eingebrannten Zustand einen zur Abscheidung einer nachfolgenden Überzugsschicht aus einem elektrophoretisch abscheidbaren Überzugsmittel (II) ausreichend niedrigen spezifischen elektrischen Widerstand aufweisen und die bevorzugt punktschweißbar sind.

Als Substrate für die erste Ausführungsform des erfindungsgemäßen Verfahrens dienen zu Coils aufgerollte Metallbleche beispielsweise mit einer für den Karosseriebau typischen Blechstärke von 0,7 bis 1,3 mm, beispielsweise aus Eisen, Zink, Aluminium oder entsprechenden Legierungen. Bevorzugt ist verzinktes Blech, beispielsweise verzinktes Stahlblech. Die Metalloberflächen können vorbehandelt, beispielsweise mit einer Phosphatierung und gegebenenfalls Passivierung versehen sein.

Das Grundierungsüberzugsmittel (Ia) wird im Coil Coating-Verfahren beidseitig auf das Metallblechsubstrat aufgewalzt. Handelt es sich um ein Grundierungsüberzugsmittel (Ia), welches keine speziellen elektrische Leitfähigkeit vermittelnden Bestandteile enthält, so wird es in einer ausreichend niedrigen Trockenschichtdicke aufgebracht, die eine zur elektrophoretischen Abscheidung einer weiteren Überzugsschicht aus einem elektrophoretisch abscheidbaren Überzugsmittel (II) ausreichende elektrische Leitfähigkeit gewährleistet, d.h. in einer noch nicht elektrisch isolierenden Trockenschichtdicke, beispielsweise in einer Trockenschichtdicke von 1 bis 3 µm. Handelt es sich hingegen um eines der im erfindungsgemäßen Verfahren bevorzugten Grundierungsüberzugsmittel (Ia), welches der ersten Überzugsschicht im eingebrannten Zustand einen zur elektrophoretischen Abscheidung einer weiteren Überzugsschicht aus einem elektrophoretisch abscheidbaren Überzugsmittel (II) ausreichend niedrigen spezifischen Widerstand verleihende elektrische Leitfähigkeit vermittelnde Bestandteile enthält, so wird das Grundierungsüberzugsmittel (Ia) in einer Trockenschichtdicke von beispielsweise 2 bis 15 µm, bevorzugt von 3 bis 10 µm aufgebracht. Das Einbrennen der Grundierungsüberzugsschicht erfolgt kurzzeitig, beispielsweise innerhalb 30 bis 60 Sekunden, bei hohen Temperaturen, beispielsweise bei 300 bis 370°C, wobei beispielsweise maximale Objekttemperaturen (PMT, peak metal temperature) zwischen 200 und 260°C erreicht werden, was z.B. in einem Konvektionsofen erfolgen kann.

Aus dem beidseitig mit der eingebrannten Grundierungsschicht versehenen Metallcoil werden in üblicher Weise Blechteile mit der gewünschten Form ausgestanzt und anschließend verformt, z.B. im Tiefziehverfahren. Die verformten Teile können dann, gegebenenfalls zusammen mit Bauteilen aus anderen Werkstoffen, zu einer Konstruktion, insbesondere einer Karosse zusammengefügt werden, beispielsweise durch Kleben und/oder Clinchen und/oder Schrauben und/oder bevorzugt Schweißen. beispielsweise Punktschweißen. Bei den Bauteilen aus anderen Werkstoffen kann es sich beispielsweise um anderweitig vorbeschichtete oder unbeschichtete Metalle oder Kunststoffe handeln, bevorzugt sind dabei Bauteile mit elektrisch leitfähiger und elektrophoretisch beschichtbarer Oberfläche.

Bei der zweiten bevorzugten Ausführungsform des erfindungsgemäßen Verfahrens wird eine Grundierungsschicht aus einem autophorctisch abscheidbaren Überzugsmittel (Ib) autophoretisch abgeschieden und eingebrannt, wobei sich im eingebrannten Zustand eine elektrisch leitfähige Überzugsschicht ergibt. Danach kann die zweite Schicht durch elektrophoretische Abscheidung aus einem elektrophoretisch abscheidbaren wäßrigen Überzugsmittel (II) aufgebracht werden.

Als autophoretisch abscheidbare Überzugsmittel (Ib) können an sich bekannte autophoretisch abscheidbare Überzugsmittel (Ib) verwendet werden, wobei diese Bestandteile enthalten, die der Grundierungsschicht im eingebrannten Zustand einen zur elektrophoretischen Abscheidung einer weiteren Überzugsschicht aus einem elektrophoretisch abscheidbaren Überzugsmittel (II) ausreichend niedrigen spezifischen Widerstand verleihen.

Bei den autophoretisch abscheidbaren Überzugsmitteln (Ib) handelt es sich um Überzugsmittel auf Basis wäßriger Bindemitteldispersionen mit negativer Oberflächenladung der Bindemittelteilchen. Aufgrund ihres in der Regel sauren pH-Wertes von beispielsweise zwischen 1 und 6, bevorzugt zwischen 1,5 und 5,0, und ihres in der Regel oxidierenden Charakters sind Autophoreselacke befähigt, ausreichend unedle Metalloberflächen unter Freisetzung entsprechender Metallionen anzugreifen. Wird dabei im Bereich der Metalloberfläche eine Metallionenkonzentration erreicht, die ausreichend ist, die in der Wasserphase dispergierten Bindemittelteilchen zu destabilisieren und zu koagulieren, so kommt es zur Abscheidung eines Überzugsfilms auf der Metalloberfäche.

Die autophoretisch abscheidbaren Überzugsmittel (Ib) besitzen im allgemeinen einen niedrigen Festkörpergehalt von beispielsweise bis zu 20 Gew.-%, wobei die Untergrenze in der Regel beispielsweise 5 Gew.-% und die Obergrenze beispielsweise 10 Gew.-% beträgt. Sie enthalten neben autophoretisch abscheidbarem filmbildenden Bindemittel, Wasser, Säure und elektrisch leitfähigen Bestandteilen in der Regel auch Oxidationsmittel sowie gegebenenfalls Vernetzer für die Bindemittel, Füllstoffe, Pigmente und lackübliche Additive.

Die autophoretisch abscheidbaren Überzugsmittel (Ib) können physikalisch trocknend oder unter Ausbildung kovalenter Bindungen vernetzbar sein. Bei den unter Ausbildung kovalenter Bindungen vernetzenden Autophoreselacken (Ib) kann es sich um selbst- oder fremdvernetzende Systeme handeln.

Die im erfindungsgemäßen Verfahren für die Herstellung der Grundierungsschicht verwendbaren Autophoreselacke (Ib) enthalten ein oder mehrere an sich neutrale oder anionische Gruppen aufweisende, filmbildende Bindemittel. Sie können, insbesondere falls die Bindemittel nicht selbstvernetzend oder physikalisch trocknend oder thermoplastisch sind, gegebenenfalls auch Vernetzer enthalten. Bindemittel und gegebenenfalls enthaltene Vernetzer liegen als wäßrige Dispersion mit negativer Oberflächenladung der Teilchen vor. Die negative Oberflächenladung stabilisiert die dispergierten Teilchen in der wäßrigen Phase. Die negative Oberflächenladung kann beispielsweise von anionischen Gruppen im Bindemittel und/oder insbesondere bei an sich neutralen Bindemitteln von anionischem Emulgator für das Bindemittel und die Vernetzer herrühren. Beispiele für anionische Gruppen im Bindemittel sind anionische Gruppen des Bindemittels an sich, beispielsweise Carboxylgruppen oder Sulfonatgruppen, und/oder anionische Reste aus der Bindemittelherstellung, beispielsweise aus der Herstellung eines an sich neutralen Bindemittels. Beispiele für anionische Reste aus der Bindemittelherstellung sind Sulfatgruppen als im Bindemittel enthaltene Überreste aus einer durch Peroxodisulfat initiierten radikalischen Polymerisation. Sowohl die Bindemittelkomponente als auch die Vernetzerkomponente unterliegen an sich keinerlei Beschränkung; es können lackübliche, dem Fachmann geläufige Harze verwendet werden. Beispielsweise können als filmbildende Bindemittel Polyester-, Polyurethan-, Epoxid- und/oder Polymerisatharze verwendet werden. Polymerisatharze, d.h. durch radikalische Polymerisation, insbesondere durch Emulsionspolymerisation oder Saatpolymerisation hergestellte Bindemittel sind besonders bevorzugt. Insbesondere bevorzugt sind übliche wäßrige, thermoplastische Polymerisatdispersionen (Latices), die Homo- oder Copolymere von olefinisch ungesättigten Monomeren mit Glastemperaturen beispielsweise zwischen 0 und 100°C als disperse Phase enthalten. Beispiele für geeignete olefinisch ungesättigte Monomere zum Aufbau solcher Homo- und Copolymercn sind (Meth)acrylsäureester, wie z.B. Methyl(meth)acrylat, Ethyl(meth)acrylat, n-Butyl(meth)acrylat, Hydroxyethyl(meth)acrylat, Hydroxypropyl(meth)acrylat, Ethylhexyl(meth)acrylat; Glycidylester ungesättigter Carbonsäuren, wie z.B. Glycidyl(meth)acrylat; (Meth)acrylamid, (Meth)acrylnitril, anionische Gruppen enthaltende Monomere, wie Alkali- z.B. Natrium-2-Sulfo-ethylmethacrylat, (Meth)acrylsäure; aber auch Monomere ohne weitere funktionelle Gruppen oder mit anderen funktionellen Gruppen, wie z.B. Ethylen, Styrol, Vinylchlorid, Vinylidenchlorid, Vinylacetat, Butadien. Beispiele für im Rahmen der Erfindung geeignete wäßrige Polymerisatdispersionen sind Styrol/Butadien-, Butadien/Acrylnitril-, Vinylchlorid-, Ethylen/Vinylacetat- sowie Vinylidenchlorid-Copolymerdispersionen.

(Meth)acryl steht hier für Acryl und/oder Methacryl.

Die Auswahl der gegebenenfalls enthaltenen Vernetzer richtet sich nach der Funktionalität der Bindemittel, d.h. die Vernetzer werden aus üblichen, dem Fachmann geläufigen Vernetzern so ausgewählt, daß sie eine zur Funktionalität der Bindemittel komplementäre, reaktive Funktionalität aufweisen. Beispiele für solche komplementäre Funktionalitäten zwischen Bindemittel und Vernetzer sind: Hydroxyl/Methylolether, Hydroxyl/ blockiertes Isocyanat. Sofern miteinander verträglich, können auch mehrere solcher komplementärer Funktionalitäten in einem Autophoreselack (Ib) nebeneinander vorliegen. Die gegebenenfalls in den Autophoreselacken (Ib) verwendeten Vernetzer können einzeln oder im Gemisch vorliegen.

Die autophoretisch abscheidbaren Überzugsmittel (Ib) enthalten eine oder mehrere freie Säuren in einer Menge zur Einstellung des vorstehend genannten pH-Bereichs und bevorzugt auch ein oder mehrere Oxidationsmittel. Beispiele für bevorzugte Säuren sind anorganische Säuren, wie Salzsäure, Phosphorsäure, Schwefelsäure, Salpetersäure, und organische Säuren, wie Ameisensäure, Essigsäure. Flußsäure ist besonders bevorzugt. Beispiele für bevorzugte Oxidationsmittel sind Chromat, Dichromat, Bromat, Chlorat, Perchlorat, Permanganat, Persulfat, Peroxodisulfat. Besonders bevorzugt ist Wasserstoffperoxid.

Eine besonders bevorzugte Kombination von Säure und Oxidationsmittel ist die Kombination Flußsäure/Wasserstoffperoxid.

Die autophoretisch abscheidbaren Überzugsmittel (Ib) enthalten elektrische Leitfähigkeit vermittelnde Bestandteile. Sie sollen der Grundierungsschicht im eingebrannten Zustand einen zur elektrophoretischen Abscheidung einer weiteren Überzugsschicht aus einem elektrophoretisch abscheidbaren Überzugsmittel (II) ausreichend niedrigen spezifischen Widerstand verleihen, im allgemeinen unter 10⁸ Ω cm, beispielsweise zwischen 10³ und 10⁸ Ω cm. Beispiele für derartige Bestandteile sind teilchenförmige elektrische Leiter oder Halbleiter, wie sie für diesen Zweck üblich und dem Fachmann geläufig sind, beispielsweise Eisenoxidschwarz, Graphit, Leitfähigkeitsruß, Metallpulver, z.B. aus Kupfer oder Edelstahl, Molybdändisulfid, spezielle Leitfähigkeitspigmente auf der Basis von Glimmerplättchen, z.B. mit mit Antimon dotiertem Zinndioxid umhüllte Glimmerplättchen. Die elektrische Leitfähigkeit verleihenden Bestandteile sind in dem autophoretisch abscheidbaren Überzugsmittel (Ib) in einer derartigen Menge enthalten, daß der gewünschte spezifische Widerstand der daraus abgeschiedenen Überzugsschicht im eingebrannten Zustand erreicht wird. Bezogen auf den Festkörpergehalt des autophoretisch abgeschiedenen Überzugsmittels (Ib) beträgt der Anteil des oder der elektrische Leitfähigkeit verleihenden Bestandteile beispielsweise zwischen 1 und 30 Gew.-%. Der Anteil kann vom Fachmann leicht ermittelt werden; er ist beispielsweise abhängig vom spezifischen Gewicht, der spezifischen elektrischen Leitfähigkeit und der Teilchengröße der eingesetzten elektrische Leitfähigkeit verleihenden Bestandteile. Es können ein oder mehrere dieser Bestandteile in Kombination vorliegen.

Die autophoretisch abscheidbaren Überzugsmittel (Ib) können Pigmente und/oder Füllstoffe enthalten. Als Pigmente kommen beispielsweise übliche, anorganische oder organische, insbesondere säurefeste Pigmente und/oder Füllstoffe in Frage. Beispiele sind Ruß, Titandioxid, Eisenoxidpigmente, Kaolin. Talkum oder Siliciumdioxid, aber auch Korrosionsschutzpigmente.

Pigmente, Füllstoffe sowie dem eingebrannten Autophoreselack (Ib) elektrische Leitfähigkeit vermittelnde Bestandteile können beispielsweise als Pigmentsuspensionen (Pigmentslurrys) oder Pigmentanreibungen in Wasser und/oder organischen, wassermischbaren Lösemitteln, wie Glykole, z.B. Ethylenglykol, Propylenglykol; Alkohole, z.B. sec.-Butanol und Hexanol; Glykolether, z.B. Ethoxypropanol, Methoxypropanol und Butoxyethanol bei der Formulierung des Autophoreselacks (Ib) eingesetzt werden. Derartige Pigmentanreibungen sind auch im Handel erhältlich und werden z.B. von der Firma HOECHST unter der Bezeichnung Colanyl^{R} vertrieben.

Die im erfindungsgemäßen Verfahren einsetzbaren autophoretisch abscheidbaren Überzugsmittel (Ib) können weiterhin übliche Additive enthalten. Beispiele dafür sind übliche Lackaddditive, wie Netzmittel, anionische und/oder nicht-ionische Emulgatoren, Schutzkolloide, Verlaufsmittel, Korrosionsinhibitoren, Weichmacher, Antischaummittel, Lösemittel beispielsweise als Filmbildehilfsmittel, Lichtschutzmittel, Fluoride, insbesondere z.B. Eisentrifluorid, Hydrogenfluoride, komplexe Fluoranionen, z.B. Tetrafluoroborate, Hexafluorozirkonate, Hexafluorotitanate.

Als Substrate für die zweite bevorzugte Ausführungsform des erfindungsgemäßen Verfahrens dienen elektrisch leitfähige, autophoretisch beschichtbare Metalloberflächen, insbesondere Metallkonstruktionen, bevorzugt metallische Oberflächen aufweisende Rohkarossen. Diese können aus einem einzigen Metall gefertigt oder in Mischbauweise aus mehreren metallischen Werkstoffen und/oder aus mit einer entsprechenden Metallschicht versehenen Kunststoffteilen aufgebaut sein.

Als metallische Oberflächen kommen von Autophoreselacksystemen, insbesondere bei saurem pH von beispielsweise zwischen 1 und 6 unter Freisetzung von Metallionen angreifbare, dem Fachmann geläufige übliche Metalloberflächen in Frage, beispielsweise aus Eisen, Zink, Aluminium oder entsprechenden Legierungen, aber auch beispielsweise verzinkte Stahloberflächen. Die Metalloberflächen können vorbehandelt, beispielsweise mit einer Phosphatierung und gegebenenfalls Passivierung versehen sein. Es sei darauf hingewiesen, daß der hier verwendete Begriff "Rohkarossen" insbesondere Kraftfahrzeugrohkarossen aber beispielsweise auch deren Bauteile sowie Sichtflächen beinhaltende Kraftfahrzeugchassis umfaßt.

Auf diese Substrate wird die Grundierungsschicht aus dem autophoretisch abscheidbaren Überzugsmittel (Ib) autophoretisch in üblicher Weise, bevorzugt im Tauchverfahren, bevorzugt in einer Trockenschichtdicke von beispielsweise 5 bis 25 µm, besonders bevorzugt von 10 bis 20 µm abgeschieden. Vor der weiteren Beschichtung mit dem elektrophoretisch abscheidbaren Überzugsmittel (II) kann die autophoretisch abgeschiedene Überzugsschicht vor dem Einbrennen mit Wasser und/oder gegebenenfalls mit speziellen Lösungen nachbehandelt, beispielsweise gespült werden. (Im Zusammenhang mit der Applikation des autophoretisch abscheidbaren Überzugsmittels kann der Begriff "Einbrennen" abhängig von der Art des Autophoreselacksystems ein Einbrennen unter chemischer Vernetzung der autophoretisch abgeschiedenen Überzugsschicht oder eine rein physikalische Trocknung bei erhöhter Temperatur, beispielsweise unter Schmelzen oder Versintern und Ausbildung eines geschlossenen Autophoreselacküberzuges bedeuten). Das Einbrennen geschieht bei dem verwendeten Autophoreselacksystem angepaßten Temperaturen von beispielsweise zwischen 80 und 190°C, bevorzugt zwischen 100 und 160°C.

Bei der dritten, besonders bevorzugten Ausführungsform des erfindungsgemäßen Verfahrens wird eine Grundierungsschicht aus einem elektrophoretisch abscheidbaren Überzugsmittel (Ic) elektrophoretisch abgeschieden und eingebrannt, wobei sich im eingebrannten Zustand eine elektrisch leitfähige Überzugsschicht ergibt. Danach kann die zweite Schicht durch elektrophoretische Abscheidung aus einem von (Ic) verschiedenen elektrophoretisch abscheidbaren wäßrigen Überzugsmittel (II) aufgebracht werden.

Als elektrophoretisch abscheidbare Überzugsmittel (Ic) können an sich bekannte anodisch oder kathodisch abscheidbare Elektrotauchlacke (ETL) verwendet werden. wobei gilt, daß das elektrophoretisch abscheidbare Überzugsmittel (Ic) Bestandteile enthält, die der Grundierungsschicht im eingebrannten Zustand einen zur elektrophoretischen Abscheidung einer weiteren Überzugsschicht aus einem von (Ic) verschiedenen elektrophoretisch abscheidbaren Überzugsmittel (II) ausreichend niedrigen spezifischen Widerstand verleihen.

Bei den elektrophoretisch abscheidbaren Überzugsmitteln (Ic) handelt es sich um wäßrige Überzugsmittel mit einem Festkörper bis zu 50 Gew.-%, beispielsweise bis 20 Gew.-%, wobei die Untergrenze beispielsweise bei 10 Gew.-% liegt. Der Festkörper wird gebildet aus für die Elektrotauchlackierung üblichen Bindemitteln, wobei zumindest ein Teil der Bindemittel ionische und/oder in ionische Gruppen überführbare Substituenten sowie gegebenenfalls zur chemischen Vernetzung fähige Gruppen trägt, sowie gegebenenfalls vorhandenen Vernetzern, elektrisch leitfähigen Bestandteilen, Füllstoffen, Pigmenten und lacküblichen Additiven.

Die ionischen Gruppen oder in ionische Gruppen überführbaren Gruppen der Bindemittel können anionische oder in anionische Gruppen überführbare Gruppen, z.B. saure Gruppen, wie -COOH, -SO₃H und/oder -PO₃H₂ und die entsprechenden, mit Basen neutralisierten anionischen Gruppen sein. Sie können auch kationische oder in kationische Gruppen überführbare, z.B. basische Gruppen, bevorzugt stickstoffhaltige basische Gruppen sein; diese Gruppen können quarternisiert vorliegen oder sie werden mit einem üblichen Neutralisationsmittel, z.B. einer organischen Monocarbonsäure, wie z.B. Ameisensäure oder Essigsäure in ionische Gruppen überführt. Beispiele sind Amino-, Ammonium-, z.B. quartäre Ammonium-, Phosponium-, und/oder Sulfonium-Gruppen.

Beispielsweise können die üblichen anionische Gruppen enthaltenden anodisch abscheidbaren Elektrotauchlack-Bindemittel und Lacke (ATL) verwendet werden. Es handelt sich beispielsweise um Bindemittel auf Basis von Polyestern, Epoxidharzestern, (Meth)acrylcopolymerharzen, Maleinatölen oder Polybutadienölen mit einem Gewichtsmittel der Molmasse (Mw) von beispielsweise 300 - 10000 und einer Säurezahl von beispielsweise 35 - 300 mg KOH/g. Die Bindemittel tragen beispielsweise -COOH, -SO₃H und/oder -PO₃H₂-Gruppen. Die Harze können nach Neutralisation von mindestens einem Teil der sauren Gruppen in die Wasserphase überführt werden. Die Bindemittel können selbstvernetzend oder fremdvernetzend sein. Die Lacke können daher auch übliche Vernetzer enthalten, z.B. Triazinharze, Vernetzer. die umesterungsfähige Gruppen enthalten oder blockierte Polyisocyanate.

Ebenfalls zur Herstellung der Grundierungsschicht einsetzbar sind die üblichen kathodischen Elektrotauchlacke (KTL) auf Basis kationischer bzw. basischer Bindemittel. Solche basischen Harze sind beispielsweise primäre, sekundäre und/oder tertiäre Aminogruppen enthaltende Harze, deren Aminzahlen z.B. bei 20 bis 250 mg KOH/g liegen. Das Gewichtsmittel der Molmasse (Mw) der Basisharze liegt bevorzugt bei 300 bis 10000. Beispiele für solche Basisharze sind Amino(meth)acrylatharze, Aminoepoxidharze, Aminoepoxidharze mit endständigen Doppelbindungen, Aminoepoxidharze mit primären OH-Gruppen, Aminopolyurethanharze, aminogruppenhaltige Polybutadienharze oder modifizierte Epoxidharz-Kohlendioxid-Amin-Umsetzungsprodukte. Diese Basisharze können selbstvernetzend sein oder sie werden mit bekannten Vernetzern im Gemisch eingesetzt. Beispiele für solche Vernetzer sind Aminoplastharze, blockierte Polyisocyanate, Vernetzer mit endständigen Doppelbindungen, Polyepoxidverbindungen oder Vernetzer, die umesterungsfähige Gruppen enthalten.

Das ETL-Überzugsmittel (Ic) enthält elektrische Leitfähigkeit vermittelnde Bestandteile. Sie sollen der Grundierungsschicht im eingebrannten Zustand einen zur elektrophoretischen Abscheidung einer weiteren Überzugsschicht aus dem elektrophoretisch abscheidbaren Überzugsmittel (II) ausreichend niedrigen spezifischen Widerstand verleihen, im allgemeinen unter 10⁸ Ω cm, beispielsweise zwischen 10³ und 10⁸ Ω cm. Beispiele für derartige Bestandteile sind teilchenförmige elektrische Leiter oder Halbleiter, wie beispielsweise Eisenoxidschwarz, Graphit, Leitfähigkeitsruß, Metallpulver, z.B. aus Aluminium, Kupfer oder Edelstahl, Molybdändisulfid, spezielle Leitfähigkeitspigmente auf der Basis von Glimmerplättchen, z.B. mit mit Antimon dotiertem Zinndioxid umhüllte Glimmerplättchen oder auch Polymere mit elektrischer Leitfähigkeit, wie z.B. bevorzugt Polyanilin. Die elektrische Leitfähigkeit verleihenden Bestandteile sind in dem ETL-Überzugsmittel (Ic) in einer derartigen Menge enthalten, daß der gewünschte spezifische Widerstand der daraus abgeschiedenen Überzugsschicht im eingebrannten Zustand erreicht wird. Bezogen auf den Festkörpergehalt des ETL-Überzugsmittels (Ic) beträgt der Anteil des oder der elektrische Leitfähigkeit verleihenden Bestandteile beispielsweise zwischen 1 und 30 Gew.-%. Der Anteil kann vom Fachmann leicht ermittelt werden; er ist beispielsweise abhängig vom spezifischen Gewicht, der spezifischen elektrischen Leitfähigkeit und der Teilchengröße der eingesetzten elektrische Leitfähigkeit verleihenden Bestandteile. Es können ein oder mehrere dieser Bestandteile in Kombination vorliegen.

Zusätzlich zu den Basisharzen und gegebenenfalls vorhandenem Vernetzer sowie den im ETL-Überzugsmittel (Ic) enthaltenen, der Grundierungsschicht im eingebrannten Zustand elektrische Leitfähigkeit verleihenden Bestandteilen kann das ETL-Überzugsmittel (Ic) Pigmente, Füllstoffe und/oder lackübliche Additive enthalten. Als Pigmente kommen beispielsweise die üblichen anorganischen und/oder organischen Buntpigmente, wie z.B. Titandioxid, Eisenoxidpigmente, Ruß, Phthalocyaninpigmente, Chinacridonpigmente, in Frage. Beispiele für Füllstoffe sind Kaolin, Talkum oder Siliciumdioxid.

Die Pigmente können zu Pigmentpasten dispergiert werden, z.B. unter Verwendung von bekannten Pastenharzen.

Als Additive sind die üblichen Additive möglich, wie sie insbesondere für ETL-Überzugsmittel bekannt sind. Beispiele dafür sind Netzmittel, Neutralisationsmittel, Verlaufsmittel, Katalysatoren, Korrosionsinhibitoren, Antischaummittel, Lösemittel.

Es ist im erfindungsgemäßen Verfahren bevorzugt, als ETL-Überzugsmittel (Ic) ein KTL-Überzugsmittel zu verwenden.

Als Substrate für die dritte, besonders bevorzugte Ausführungsform des erfindungsgemäßen Verfahrens sind elektrisch leitfähige, elektrophoretisch beschichtbare Konstruktionen, beispielsweise Metallkonstruktionen geeignet. Insbesondere geeignet sind z.B. Automobilkarossen oder Teile davon, sie können aus vorbehandeltem oder unvorbehandeltem Metall oder elektrisch leitendem oder mit einer elektrisch leitfähigen Schicht versehenem Kunststoff bestehen.

Auf diese Substrate wird die erste Überzugsschicht aus dem elektrophoretisch abscheidbaren Überzugsmittel (Ic) elektrophoretisch in üblicher Weise in einer Trockenschichtdicke von beispielsweise 5 bis 15 µm abgeschieden und beispielsweise bei Temperaturen zwischen 130 und 180°C eingebrannt.

Die bei der ersten bevorzugten Ausführungsform des erfindungsgemäßen Verfahrens unter Verwendung des Überzugsmittels (Ia) oder bei der zweiten bevorzugten Ausführungsform des erfindungsgemäßen Verfahrens unter Verwendung des Überzugsmittels (Ib) oder bei der dritten, besonders bevorzugten Ausführungsform des erfindungsgemäßen Verfahrens unter Verwendung des Überzugsmittels (Ic) erhaltene, eingebrannte Grundierungsschicht überzieht die gesamte Oberfläche des Substrats.

Auf das so erhaltene mit einer elektrisch leitfähigen, einen spezifischen Widerstand von insbesondere unter 10⁸, beispielsweise zwischen 10³ und 10⁸ Ω cm aufweisenden, eingebrannten Grundierungsschicht versehene Substrat, bevorzugt eine Automobilkarosse, wird die zweite Überzugsschicht durch Elektrotauchlackierung aus einem vom elektrophoretisch abscheidbaren Überzugsmittel (Ic) verschiedenen, elektrophoretisch abscheidbaren Überzugsmittel (II) aufgetragen und eingebrannt. Im Anschluß daran kann erfindungsgemäß die Kunststoffolie aufgebracht werden.

Bei der zweiten Überzugsschicht kann es sich um eine den dekorativen Eindruck eines erfindungsgemäß hergestellten Schichtenverbundes beeinflußende oder nicht beeinflußende Überzugsschicht handeln, bevorzugt hat die zweite Überzugsschicht einen Einfluß auf die dekorative Wirkung. Insbesondere handelt es sich bei den elektrophoretisch abscheidbaren Überzugsmitteln (II) dann um farb- und/oder effektgebende Überzugsmittel.

Zur Herstellung der zweiten Überzugsschicht können im erfindungsgemäßen Verfahren an sich bekannte anodisch oder kathodisch abscheidbare Elektrotauchlacke (ETL) als von den ETL-Überzugsmitteln (Ic) verschiedene ETL-Überzugsmittel (II) verwendet werden.

Bei den ETL-Überzugsmitteln (II) handelt es sich insbesondere um wäßrige Überzugsmittel mit einem Festkörper bis zu 50 Gew.-%, beispielsweise bis 20 Gew.-%, wobei die Untergrenze beispielsweise bei 10 Gew.-% liegt. Der Festkörper wird gebildet aus für die Elektrotauchlackierung üblichen Bindemitteln, wobei zumindest ein Teil der Bindemittel ionische und/oder in ionische Gruppen überführbare Substituenten sowie gegebenenfalls zur chemischen Vernetzung fähige Gruppen trägt, sowie gegebenenfalls vorhandenen Vernetzern, Füllstoffen, Pigmenten oder lacküblichen Additiven.

Bezüglich der ionischen Gruppen, der Bindemittel und der gegebenenfalls enthaltenen Vernetzer gilt das vorstehend im Zusammenhang mit den ETL-Überzugsmitteln (Ic) Gesagte.

Bevorzugt wird als ETL-Überzugsmittel (II) ein ATL-Überzugsmittel verwendet.

Zusätzlich zu den Basisharzen und gegebenenfalls vorhandenem Vernetzer können die ETL-Überzugsmittel (II) farb- und/oder effektgebende Pigmente, Füllstoffe und/oder lackübliche Additive enthalten. Insbesondere enthalten sie dann farb- und/oder effektgebende Pigmente, bevorzugt nur farbgebende Absorptionspigmente, wenn die zweite Überzugschicht einen Einfluß auf die dekorative Wirkung eines erfindungsgemäß hergestellten Schichtenverbundes hat. Als Pigmente kommen beispielsweise die üblichen anorganischen und/oder organischen Buntpigmente und/oder Effektpigmente, wie z.B. Titandioxid, Eisenoxidpigmente, Ruß, Phthalocyaninpigmente, Chinacridonpigmente, Metallpigmente, z.B. aus Titan, Aluminium oder Kupfer, Interferenzpigmente, wie z.B. titandioxidbeschichtetes Aluminium, beschichteter Glimmer, Graphiteffektpigmente, plättchenförmiges Eisenoxid oder plättchenförmige Kupferphthalocyaninpigmente in Frage. Beispiele für Füllstoffe sind Kaolin, Talkum oder Siliciumdioxid.

Die Pigmente können zu Pigmentpasten dispergiert werden, z.B. unter Verwendung von bekannten Pastenharzen. Insbesondere im Fall von ATL-Überzugsmitteln (II) ist es möglich, Pigmentpasten zu verwenden, wie sie in den dem Fachmann bekannten. zur Herstellung von Zweischichtlackierungen des Basislack/Klarlack-Typs geeigneten, spritzapplizierbaren Wasserbasislacken verwendet werden.

Als Additive sind die üblichen Additive möglich, wie sie insbesondere für ETL-Überzugsmittel bekannt sind. Beispiele dafür sind Netzmittel, Neutralisationsmittel, Verlaufsmittel, Katalysatoren, Korrosionsinhibitoren, Antischaummittel, Lösemittel, Lichtschutzmittel gegebenenfalls in Kombination mit Antioxidantien.

Die zweite Überzugsschicht wird bevorzugt in einer Trockenschichtdicke von beispielsweise 10 bis 50 µm, besonders bevorzugt zwischen 15 bis 40 µm, aufgetragen und bei erhöhten Temperaturen, beispielsweise zwischen 130 und 180°C eingebrannt. Die zweite Überzugsschicht besitzt im allgemeinen praktisch keine elektrische Leitfähigkeit, d.h. sie weist im eingebrannten Zustand einen spezifischen Widerstand von im allgemeinen über 10⁹ Ω cm auf.

Die zweite Überzugsschicht kann sich, muß sich aber nicht ganzflächig über das dreidimensionale Substrat erstrecken. So ist es beispielsweise insbesondere bei der zweiten und dritten Ausführungsform des erfindungsgemäßen Verfahrens möglich, eine ganzflächige erste Beschichtung durch Auftrag einer Grundierung aus dem Grundierungsüberzugsmittel (Ib) oder (Ic) und eine zweite Beschichtung aus dem ETL-Überzugsmittel (II) im wesentlichen nur an äußeren Bereichen, insbesondere an sichtbaren Flächen des mit dem Schichtenverbund zu versehenden Substrats durchzuführen, d.h. beispielsweise nicht in engen Hohlräumen einer Karosserie.

Nach dem Einbrennen der aus dem ETL-Überzugsmittel (II) abgeschiedenen, zweiten Überzugsschicht wird die Kunststoffolie aufgebracht. Bevorzugt erfolgt dies im wesentlichen nur an äußeren Bereichen, insbesondere an sichtbaren Flächen eines dreidimensionalen Substrats, beispielsweise bevorzugt an den äußeren Sichtflächen einer Automobilkarosse.

Bei den im erfindungsgemäßen Verfahren aufgebrachten Kunststoffolien handelt es sich insbesondere um solche aus thermoplastischem Kunststoff oder um Verbundfolien aus zwei oder mehreren Lagen eines oder mehrerer verschiedener thermoplastischer Kunststoffe. Beispiele für geeignete thermoplastische Kunststoffe sind Polyolefinkunststoffe, Polyamid, Polyvinylchlorid. Bevorzugt sind Kunststoffolien aus Polyvinylchlorid. Die Kunststoffolien besitzen im allgemeinen eine Dicke von 20 bis 200, bevorzugt 40 bis 100 µm und sie bestimmen alleine oder im Zusammenwirken mit der darunter befindlichen aus dem Überzugsmittel (II) erstellten Lackschicht die dekorative Wirkung der erfindungsgemäß hergestellten Schichtenverbunde. Die Kunststoffolien leisten auch einen Beitrag zur schützenden Wirkung der erfindungsgemäß hergestellten Schichtenverbunde, beispielsweise schützen sie vor Steinschlagschäden, insbesondere bei Verwendung von dickschichtigen Kunststoffolien.

Die im erfindungsgemäßen Verfahren eingesetzten Kunststoffolien können nichttransparent sein und den Untergrund optisch vollständig abdecken, so daß die dekorative Wirkung eines erfindungsgemäß hergestellten Schichtenverbundes ausschließlich von der Kunststoffolie bestimmt wird. Beispielsweise kann die Kunststoffolie an der Oberfläche gefärbt sein oder aus einem massegefärbten Kunststoff bestehen. Massegefärbte Kunststoffe enthalten eine ausreichende Menge an Pigmenten und daraus gefertigte Kunststoffolien sind nichttransparent. Die Kunststoffolien können aber auch, gegebenenfalls auch zusätzlich mit einer deckend pigmentierten Lackschicht oder einem deckenden Druck (z.B. als Muster oder bildliche Darstellung) versehen sein. Als Pigmente zur Massefärbung des Kunststoffs bzw. zur Pigmentierung der deckenden Lackschicht kommen übliche anorganische und/oder organische Farb- und/oder Effektpigmente in Frage, wie beispielsweise Titandioxid, Ruß, Eisenoxidpigmente, Phthalocyaninpigmente, Chinacridonpigmente, Metallpigmente, z.B. aus Aluminium, Interferenzpigmente, wie z.B. titandioxidbeschichtetes Aluminium, beschichteter Glimmer oder plättchenförmige Kupferphthalocyaninpigmente. Bevorzugt ist die alleinige Anwesenheit von Absorptionspigmenten, d.h. bevorzugt handelt es sich bei den nichttransparenten Kunststoffolien um unifarbene Kunststoffolien. Die nichttransparenten Kunststoffolien können weitere zusätzliche Lackschichten aufweisen und/oder bedruckt (z.B. in Form eines Musters oder Bildes) sein.

Bevorzugt werden im erfindungsgemäßen Verfahren jedoch transparente Kunststoffolien verwendet, die im Zusammenwirken mit der aus dem ETL-Überzugsmittel (II) erstellten Überzugsschicht die dekorative Wirkung der erfindungsgemäß hergestellten Schichtenverbunde bestimmen.

Die transparenten Kunststoffolien können farblos transparent oder transparent eingefärbt sein, beispielsweise bevorzugt mit im Kunststoff löslichen Farbstoffen. Die Einfärbung kann auch, gegebenfalls auch zusätzlich zum Einsatz von löslichen Farbstoffen von einer geringen, nichtdeckenden Menge an Farbpigmenten oder von ausreichend feinteiligen Farbpigmenten herrühren.

Die transparenten Kunststoffolien können auch Effektpigmente enthalten.

Die transparenten Kunststoffolien können auch nichtdeckend lackiert und/oder bedruckt (z.B. in Form eines Musters oder Bildes) sein. Als Lackierung kommen sowohl Klarlackschichten als auch ein- oder mehrschichtige transparente Farbund/oder Effektlackierungen in Frage.

Die im erfindungsgemäßen Verfahren eingesetzten transparenten oder nichttransparenten Kunststoffolien können eine Struktur aufweisen, beispielsweise mit einer Prägung versehen sein, bevorzugt besitzen die Kunststoffolien jedoch eine glatte, insbesondere glänzende Oberfläche.

Die Kunststoffolien werden bevorzugt in Form eines Foliensatzes verarbeitet, d.h. sie liegen bevorzugt jeweils als eine auf die einzelnen sichtbaren Oberflächen eines dreidimensionalen Substrates paßgenau zugeschnittene Anzahl von Kunststoffolien vor. Dabei können die einzelnen Kunststoffolien eines Foliensatzes unterschiedliches Design besitzen. Bei unterschiedlichem Design der einzelnen Folien können Substrate mit einem hinsichtlich der dekorativen Wirkung uneinheitlichen Gesamteindruck ausgestattet werden. Bevorzugt besitzen die einzelnen Kunststoffolien eines Foliensatzes gleiches Design.

Erfindungsgemäß werden die Schichtenverbunde durch Aufbringen der Kunststoffolien auf die aus dem ETL-Überzugsmittel (II) abgeschiedenen und eingebrannten Überzugsschichten hergestellt. Bevorzugt handelt es sich bei dem Aufbringen um ein Aufkleben, das gegebenenfalls durch geeignete Maßnahmen, wie z.B. Einwirkung von Wärme und/oder Vakuum unterstützt werden kann. Das Aufkleben kann unter Verwendung eines Schmelzklebers, wäßrigen Dispersionsklebers oder eines Klebers auf Lösemittelbasis erfolgen oder es handelt sich bei den Kunststoffolien um selbstklebende, auf der Rückseite mit einem Haftkleber versehene Kunststoffolien, die nach Ablösen von einem flächigen Träger aufgeklebt werden. Insbesondere bei Verwendung selbstklebender Kunststoffolien ist es besonders einfach, falls gewünscht, die äußere Schicht eines erfindungsgemäß hergestellten Schichtenverbundes zu erneuern, indem die alte Selbstklebefolie entfernt und eine neue aufgeklebt wird. Dabei kann das ursprüngliche Design gewählt werden oder es kommt zu einem Designwechsel durch Wahl einer anderen Kunststoffolie.

Das Aufkleben der Kunststoffolien kann sowohl im industriellen Bereich, beispielsweise bei einem Automobilhersteller als auch im handwerklichen Bereich, beispielsweise in einer Kraftfahrzeugwerkstatt, oder im Do-it-yourself-Bereich durch den Endverbraucher erfolgen. Insbesondere im handwerklichen und im Do-it-yourself-Bereich wird bevorzugt mit selbstklebenden Kunststofffolien gearbeitet, besonders bevorzugt mit einem Satz von selbstklebenden Kunststofffolien, beispielsweise im Fall von Automobilen mit einer entsprechenden Anzahl von auf die einzelnen sichtbaren Oberflächen der Karosserie paßgenau zugeschnittenen Kunststofffolien.

Das erfindungsgemäße Verfahren ist besonders zweckmäßig bei der Oberflächenausstattung solcher dreidimensionaler Substrate, beispielsweise Automobilkarosserien oder Teile davon, die eine einfache Formgebung aufweisen, d.h. glatte oder geschwungene Oberflächen ohne viele Ecken, Kanten, Sicken und Winkel besitzen.

Durch das erfindungsgemäßen Verfahren wird ein auf die Oberfläche dreidimensionaler Substrate aufgebrachter, schützender und dekorativer Schichtenverbund erhalten, bestehend aus aus einem Grundierungsüberzugsmittel (Ia) oder (Ib) oder (Ic) erstellter Grundierungsschicht, darauf aus einem ETL-Überzugsmittel (II) aufgebrachter Überzugsschicht und darauf aufgeklebter Kunststofffolie.

Das erfindungsgemäße Verfahren erlaubt es dreidimensionale elektrisch leitfähige Substrate, insbesondere Automobilkarossen mit einem schützenden und dekorativen Schichtenverbund zu versehen. Insbesondere bei Verwendung transparenter Kunststofffolien als äußere Deckschicht des erfindungsgemäß hergestellten Schichtenverbundes kann eine Vielzahl von dekorativen Varianten hergestellt werden. Beispielsweise ist es möglich die unter Verwendung des Grundierungsüberzugsmittels (Ia) oder (Ib) oder (Ic) grundierten Substrate in eine der Anzahl von in verschieden farbiger Pigmentierung zur Verfügung stehenden ETL-Überzugsmitteln (II) entsprechende Anzahl von Gruppen aufzuteilen. Anschließend kann jede der so gebildeten Gruppen von grundierten Substraten mit einer zweiten Überzugsschicht aus jeweils einem der verschieden pigmentierten ETL-Überzugsmittel (II) versehen werden. Dabei ist die Anzahl der in verschiedenen Farbtönen verwendeten ETL-Überzugsmittel (II) vorzugsweise begrenzt. Auf die mit der zweiten Überzugsschicht versehenen, in einer begrenzten Farbtonvielfalt vorliegenden Substrate können danach jeweils verschiedene transparente Kunststofffolien aufgebracht werden. Dabei können die verschiedenen möglichen Kombinationen von transparenten Kunststoffolien mit der zur Verfügung stehenden Anzahl von verschieden farbig vorbeschichteten Substraten realisiert werden.

Das erfindungsgemäße Verfahren ist logistisch einfach, es kann mit einer begrenzten Anzahl verschiedener Überzugsmittel durchgeführt werden, die Spritzapplikation von Überzugsmitteln und damit der Anfall von typischen Abfällen aus der Spritzlackierung werden vermieden. Das erfindungsgemäße Verfahren gestattet es, die Oberfläche dreidimensionaler Substrate, insbesondere von Kraftfahrzeugen schützend zu beschichten und dekorativ auszustatten. Dabei ist eine einheitliche Farbgebung bzw. Effektgebung auch bei Konstruktionen aus verschiedenen Substratteilen möglich.

## Patentansprüche

1. Beschichtetes, dreidimensionales, elektrisch leitfähiges Substrat, auf dem eine erste, eingebrannte, elektrisch leitfähige Grundierungsschicht aus einem Überzugsmittel (I) aufgebracht ist, auf der genannten ersten Grundierungsschicht eine zweite, elektrophoretisch abgeschiedene, eingebrannte Überzugsschicht aus einem elektrophoretisch abscheidbaren Überzugsmittel (II) aufgebracht ist und auf der genannten zweiten Überzugsschicht eine Kunststofffolie aufgebracht ist.

2. Beschichtetes, dreidimensionales, elektrisch leitfähiges Substrat nach Anspruch 1, bei dem es sich um Automobilkarosserien oder Teile davon handelt.

3. Verfahren zur Herstellung des beschichteten, dreidimensionalen, elektrisch leitfähigen Substrats nach Anspruch 1 oder 2, worin auf ein elektrisch leitfähiges Substrat eine im eingebrannten Zustand elektrisch leitfähige Grundierungsschicht aus einem Überzugsmittel (I) unter Vermeidung des Spritzauftrags aufgebracht und eingebrannt wird, ein noch nicht in der gewünschten dreidimensionalen Form vorliegendes Substrat in eine dreidimensionale Form verformt wird, worauf eine zweite Überzugsschicht aus einem elektrophoretisch abscheidbaren Überzugsmittel (II) elektrophoretisch abgeschieden und eingebrannt wird, auf die anschließend eine Kunststofffolie aufgebracht wird.

4. Verfahren nach Anspruch 3, **dadurch gekennzeichnet, daß** die leitfähige Grundierungsschicht durch Streichen, Walzen, Tauchen oder Fluten aufgebracht wird.

5. Verfahren nach Anspruch 3 oder 4, **dadurch gekennzeichnet, daß** die leitfähige Grundierungsschicht im Coil-Coating-Verfahren, durch autophoretische Abscheidung oder elektrophoretische Abscheidung aufgebracht wird.

6. Verfahren nach Anspruch 3, 4 oder 5, **dadurch gekennzeichnet, daß** die leitfähige Grundierungsschicht auf die gesamte Oberfläche des Substrats aufgebracht wird.

7. Verfahren nach einem der Ansprüche 3 bis 6, **dadurch gekennzeichnet, daß** das Substrat nach Aufbringen und Einbrennen der leitfähigen Grundierungsschicht dreidimensional verformt und vorher gegebenenfalls gestanzt oder geschnitten wird.

8. Verfahren nach einem der Ansprüche 3 bis 7, **dadurch gekennzeichnet, daß** das Substrat in der Form von Teilen vorliegt, die vor Aufbringen der zweiten Überzugsschicht zu einer Konstruktion zusammengefaßt werden.

9. Verfahren nach einem der Ansprüche 3 bis 8, **dadurch gekennzeichnet, daß** die leitfähige Grundierungsschicht auf ein Substrat in der Form eines Coils aus Metallblech beidseitig im Coil-Coating-Verfahren aufgebracht und eingebrannt wird, aus dem Coil Blechteile ausgestanzt und verformt und dann mit der zweiten Überzugsschicht durch elektrophoretische Abscheidung versehen werden.

10. Verfahren nach einem der Ansprüche 3 bis 9, **dadurch gekennzeichnet, daß** es zur Beschichtung von Kraftfahrzeugen oder deren Teilen durchgeführt wird.

## Claims

1. A coated, three-dimensional, electrically conductive substrate to which a first, stoved, electrically conductive primer coat comprising a coating medium (I) is applied, and a second, electrophoretically deposited, stoved coating layer comprising an electrophoretically depositable coating medium (II) is applied to said first primer coat, and a plastics film is applied to said second coating layer.

2. A coated, three-dimensional, electrically conductive substrate according to claim 1, which constitutes automobile bodies or parts thereof.

3. A method of producing the coated, three-dimensional, electrically conductive substrate according to claims 1 or 2, wherein a primer coat which comprises a coating medium (I) and which is electrically conductive in its stoved state is applied to an electrically conductive substrate, with the avoidance of spray application, and is stoved, a substrate which is not yet present in the desired three-dimensional shape is formed into a three-dimensional shape, whereupon a second coating layer which comprises an electrophoretically depositable coating medium (II), to which a plastics film is subsequently applied, is electrophoretically deposited and stoved.

4. A method according to claim 3, **characterised in that** the conductive primer coat is applied by brushing, rolling, dipping or flooding.

5. A method according to claims 3 or 4, **characterised in that** the conductive primer coat is deposited by a coil-coating process, by autophoretic deposition or by electrophoretic deposition.

6. A method according to claims 3, 4 or 5, **characterised in that** the conductive primer coat is applied to the entire surface of the substrate.

7. A method according to any one of claims 3 to 6, **characterised in that** after the application and stoving of the conductive primer coat the substrate is shaped three-dimensionally after it has optionally been previously punched or cut.

8. A method according to any one of claims 3 to 7, **characterised in that** the substrate is present in the form of parts which are assembled to form a construction before the application of the second coating layer.

9. A method according to any one of claims 3 to 8, **characterised in that** the conductive primer coat is applied by a coil-coating process to both sides of the substrate in the form of a coil of sheet metal and is stoved, and sheet metal parts are punched from the coil and shaped and are then provided with the second coating layer by electrophoretic deposition.

10. A method according to any one of claims 3 to 9, **characterised in that** it is carried out for the coating of motor vehicles or parts thereof.

## Revendications

1. Substrat électroconducteur, tridimensionnel et recouvert, sur lequel est appliquée une couche de fond électroconductrice et cuite à base d'un agent de revêtement (I), une deuxième couche de revêtement déposée par électrophorèse et cuite à base d'un agent de revêtement (II) pouvant être précipité par électrophorèse étant appliquée sur la première couche de fond citée et un film plastique étant appliqué sur la deuxième couche de revêtement citée.

2. Substrat électroducteur, tridimensionnel et recouvert selon la revendication 1, pour lequel il s'agit de carrosseries automobiles ou de pièces de carrosserie.

3. Procédé pour la fabrication du substrat électroconducteur, tridimensionnel et recouvert selon la revendication 1 ou 2, avec lequel une couche de fond électroconductrice dans l'état cuit à base d'un agent de revêtement (I) est appliquée et cuite sur un substrat électroconducteur en évitant l'application par pulvérisation, un substrat non encore présent dans la forme tridimensionnelle souhaitée étant déformé dans une forme tridimensionnelle, après quoi une deuxième couche de revêtement à base d'un agent de revêtement (II) pouvant être déposé par électrophorèse est déposée par électrophorèse et cuite, sur laquelle est appliqué ensuite un film plastique.

4. Procédé selon la revendication 3, **caractérisé en ce que** la couche de fond conductrice est appliquée par enduction, cylindrage, immersion ou ruissellement.

5. Procédé selon la revendication 3 ou 4, **caractérisé en ce que** la couche de fond est appliquée dans le procédé de prélaquage (Coil-Coating) par dépôt autophonétique ou électrophorétique.

6. Procédé selon la revendication 3, 4 ou 5, **caractérisé en ce que** la couche de fond conductible est appliquée sur l'ensemble de la surface du substrat.

7. Procédé selon l'une quelconque des revendications 3 à 6, **caractérisé en ce que** le substrat est déformé de façon tridimensionnelle après l'application et la cuisson de la couche de fond conductrice et est éventuellement découpé ou coupé auparavant.

8. Procédé selon l'une quelconque des revendications 3 à 7, **caractérisé en ce que** le substrat est présent sous la forme de parties qui sont regroupées en une construction avant l'application de la deuxième couche de revêtement.

9. Procédé selon l'une quelconque des revendications 3 à 8, **caractérisé en ce que** la couche de fond conductrice est appliquée sur un substrat sous la forme d'une bobine à base de tôle métallique des deux côtés dans le procédé de prélaquage et cuite, des parties en tôle sont découpées dans la bobine et déformées et sont pourvues ensuite par dépôt électrophorétique avec la deuxième couche de revêtement.

10. Procédé selon l'une quelconque des revendications 3 à 9, **caractérisé en ce qu'**il est appliqué pour le revêtement de véhicules ou de leurs pièces.
